Europäisches Patentamt

European Patent Office

Office européen des brevets

(11) Veröffentlichungsnummer: **0 374 418**
**A1**

## (12) EUROPÄISCHE PATENTANMELDUNG

(21) Anmeldenummer: 89119558.8

(51) Int. Cl.⁵: **B28C 7/06**

(22) Anmeldetag: 21.10.89

(30) Priorität: 07.12.88 DE 3841146

(43) Veröffentlichungstag der Anmeldung:
27.06.90 Patentblatt 90/26

(84) Benannte Vertragsstaaten:
AT BE CH DE ES FR GB GR IT LI LU NL SE

(71) Anmelder: Maschinen- und Apparatebau
August Tepe GmbH
Kopernikusstrasse 6
D-2848 Vechta 1(DE)

(72) Erfinder: Tepe, August
Alter Ziegelhof 26
D-2848 Vechta(DE)

(74) Vertreter: Eisenführ, Speiser & Strasse
Martinistrasse 24
D-2800 Bremen 1(DE)

(54) Vorrichtung zur Herstellung gebrauchsfertiger Mischungen aus Schüttgut, wie z.B. Zement und Sand.

(57) Eine Vorrichtung zur Herstellung gebrauchsfertiger Mischungen aus Schüttgut, wie z.B. Zement und
Sand, das in einem oder mehreren Behältern (2, 3)
bereitgehalten wird, enthält einen Auslauf (4, 5) an
jedem Behälter, eine etwa waagerechte Radkammer
(18) an jedem Auslauf, je ein Zellenrad (20) mit
mehreren auswärtsgerichteten Radflügeln (24) in jeder Radkammer sowie eine die Radkammer nach
unten hin begrenzende, einen Auslaß aufweisende
Verschlußplatte (40) und eine den Auslaß abdeckende und den Förderquerschnitt des Zellenrades begrenzende Abdeckplatte (50) über der Radkammer.
Um den reibungslosen Betrieb auch bei grobkörnigem Schüttgut zu gewährleisten, sind die Radflügel
der Zellenräder gegen die Wirkung einer Feder (32)
beweglich angeordnet und können daher festen Ablagerungen oder gröberen Körnern, Steinen etc. auf
der Verbundplatte nach oben hin ausweichen.

Fig 3

EP 0 374 418 A1

## Vorrichtung zur Herstellung gebrauchsfertiger Mischungen aus Schüttgut, wie z.B. Zement und Sand

Die Erfindung betrifft eine Vorrichtung zur Herstellung gebrauchsfertiger Mischungen aus Schüttgut, wie z.B. Zement und Sand, das in einem oder mehreren Behältern bereitgehalten wird, mit einem Auslauf in jedem Behälter, mit einer etwa waagerechten Radkammer an jedem Auslauf, mit je einem Zellenrad mit mehreren auswärtsgerichteten Radflügeln in jeder Radkammer, mit einer die Radkammer unten begrenzenden, einen Auslauf aufweisenden Verschlußplatte, und mit einer den Auslaß abdeckenden und den Förderquerschnitt des Zellenrades begrenzenden, insbesondere geneigten Abdeckplatte über jeder Radkammer.

Eine derartige Vorrichtung ist aus der DE-OS 36 40 766 bekannt, bei der aus den Kammern des Silos mittels der Zellenräder z.B. Sand und Zement dosiert an eine Mischeinrichtung abgegeben wird, welche - unter Zugabe von Wasser - eine Fertigmischung, z.B. Mörtel oder Estrich, mischt und abgibt. Die Zellenräder bilden zusammen mit ihren Radkammern sowie der Abdeckplatte und der Verschlußplatte eine Zellenradschleuse, deren Fördermenge pro Zeiteinheit von der jeweils gewählten Drehgeschwindigkeit des Zellenrades abhängt. Bei Verwendung eines mehrere Kammern aufweisenden Baustellensilos kann dadurch Zement und Sand aus jeweils einer Kammer in jeweils vorbestimmtem Mischungsverhältnis in die nachgeschaltete Mischeinrichtung dosiert werden. Bei dieser bekannten Vorrichtung sind die Radflügel unbeweglich mit der Nabe des Zellenrades verbunden. Da als Schüttgut neben dem Zement oftmals Sand mit relativ großer Korngröße verwendet wird, besteht die Gefahr, daß die Radflügel in den Radkammern durch größere Sandkörner oder beigemischte Kieselsteine etc. verklemmen, wenn diese Sandkörner oder Steine zwischen Verschlußplatte und die Unterkante der Radflügel geraten und die Radflügel festkeilen. Nachteilig ist dabei, daß die Zellenräder dadurch langsamer drehen oder ganz zum Stillstand kommen, wodurch das Mischverhältnis gestört wird und der Antrieb des Zellenrades schließlich von Hand oder automatisch abgeschaltet werden muß, um die Verklemmung des Zellenrades zu beseitigen.

Aufgabe der Erfindung ist es daher, eine Vorrichtung der eingangs genannten Art derart weiterzubilden, daß ein störungsfreier Betrieb der Zellenräder am Siloauslauf möglich ist.

Diese Aufgabe wird bei der Vorrichtung der eingangs genannten Art erfindungsgemäß dadurch gelöst, daß die Radflügel der Zellenräder gegen die Wirkung einer Feder vertikal beweglich angeordnet sind.

Die Vorteile der Erfindung liegen insbesondere darin, daß die Radflügel der Zellenräder, die in vorgegebenem geringem Abstand über der Verschlußplatte umlaufen, gegen die Wirkung einer Feder vertikal nach oben beweglich angeordnet sind und daher nach oben hin ausweichen können, wenn sich größere Sandkörner od.dgl. auf der Verschlußplatte festsetzen. Aufgrund der beweglichen Lagerung der Radflügel können diese nach oben ausweichen, wenn grobe Sandkörner oder kleine Steinchen zwischen die Verschlußplatte und die Radflügel gelangen, so daß die Zellenräder ohne merklichen Widerstand ihre Drehbewegung fortsetzen können. Eine Verlangsamung der Drehbewegung oder gar ein Stillstand der Zellenräder wird zuverlässig verhindert.

Besonders bevorzugt sind die Radflügel jedes Zellenrades um Achsen verschwenkbar, die in einer Ebene senkrecht zur Zellenradachse verlaufen und näherungsweise gegen die Zellenradachse gerichtet sind. Die Radflügel werden bei dieser Ausführungsform der Erfindung von auf der Verschlußplatte festsitzenden Steinen um eine horizontale Achse verschwenkt und können sich dadurch ohne größeren Widerstand über derartige Erhebungen hinwegdrehen.

Gemäß einer besonderen Ausführungsform der Erfindung enthält jedes Zellenrad eine Zentralscheibe, an der die Radflügel beweglich angeordnet sind. Auf der Unterseite der Zentralscheibe sind bevorzugt in gleichmäßigem Umfangsabstand Lagerklötze mit je einer auswärtsgerichteten Lagerbohrung angeordnet. Die Radflügel sitzen an ihrem der Zellenradachse zugewandten Ende an gekröpften Armen, die mit ihrem freien Ende in den Lagerbohrungen der Lagerklötze drehbar lagern und unter der Wirkung einer Feder in eine Normalstellung vorgespannt sind, in welcher die Unterkante der Radflügel einen zum störungsfreien Lauf erforderlichen geringen Abstand von der Verschlußplatte besitzt. Gegen die Wirkung der Feder lassen sich die Radflügel an ihren gekröpften Armen - um horizontale Achsen - aufwärts verschwenken, um Erhebungen auszuweichen, die sich auf der Verschlußplatte ausbilden.

Vorteilhafte Weiterbildungen der Erfindung sind durch die Merkmale der Unteransprüche gekennzeichnet.

Im folgenden wird ein Ausführungsbeispiel der Erfindung anhand der Zeichnung näher erläutert.

Es zeigen:

Fig. 1 eine Seitenansicht einer Vorrichtung zur Herstellung gebrauchsfertiger Mischungen;

Fig. 2 eine Aufsicht auf eine Radkammer längs der Linie II-II der Fig. 1;

Fig. 3 eine Seitenansicht durch die Radkammer der Fig. 2;

Fig. 4 eine vergrößerte Seitenansicht eines Radflügels des Zellenrades gemäß Fig. 3;

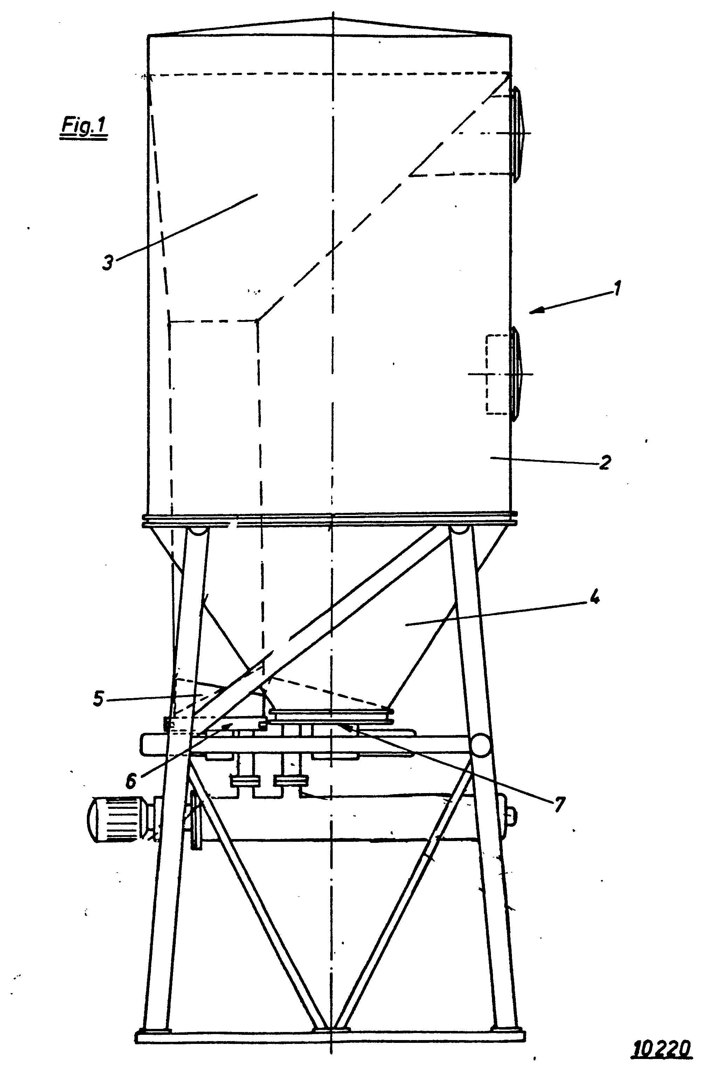

In Fig. 1 ist ein Baustellensilo 1 in schematischer Seitenansicht dargestellt. Das Baustellensilo 1 besteht aus einem Außenbehälter 2 und einem darin eingesetzten Innenbehälter 3. An der Unterseite weisen die Behälter 2, 3 Siloausläufe 4, 5 auf, aus denen das in den Behältern 2, 3 gespeicherte Schüttgut auslaufen kann. An die freien Enden der Siloausläufe 4, 5 ist je eine Dosiereinrichtung 6, 7 angeschlossen, über welche das in den Behältern 2, 3 gespeicherte Schüttgut, z.B. Sand im Behälter 2 und Zement im Behälter 3, dosiert an eine Mischeinrichtung 10 abgegeben werden kann.

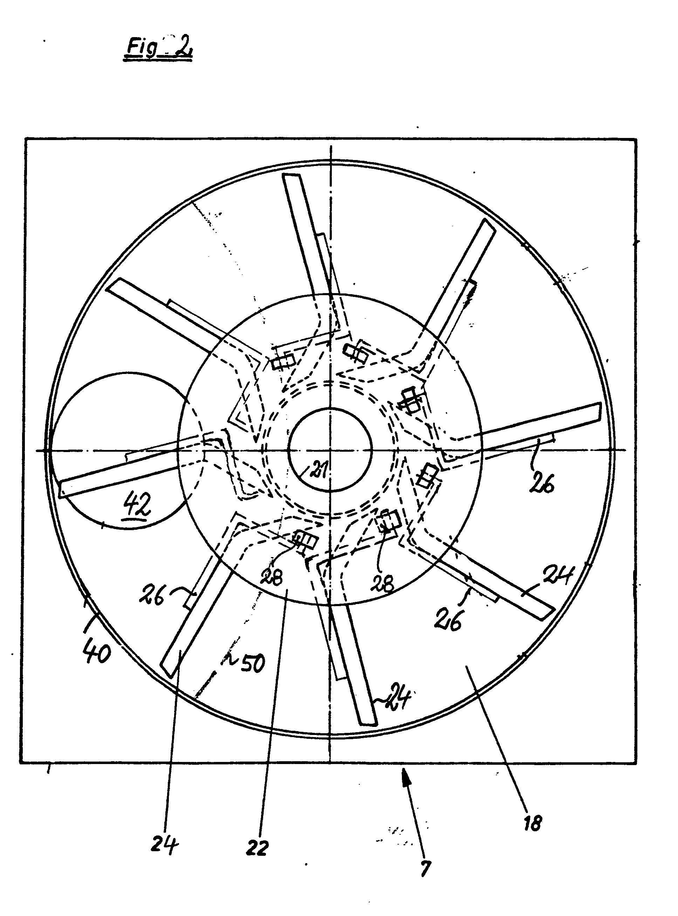

In den Fig. 2, 3 und 4 sind die Dosiereinrichtungen 6, 7 näher dargestellt. Die Dosiereinrichtungen 6, 7 sind als Zellenradschleusen ausgebildet und besitzen am unteren Ende der Ausläufe 4, 5 je eine etwa waagerechte Radkammer 18. In jeder Radkammer ist je ein Zellenrad 20 um eine - näherungsweise vertikale - Zellenradachse 21 drehbar gelagert und besitzt mehrere auswärtsgerichtete Radflügel 24. Die Radkammern 18 werden nach unten hin durch je eine Verschlußplatte 40 begrenzt, die einen von der Zellenradachse 21 beabstandeten Auslaß 42 aufweist.

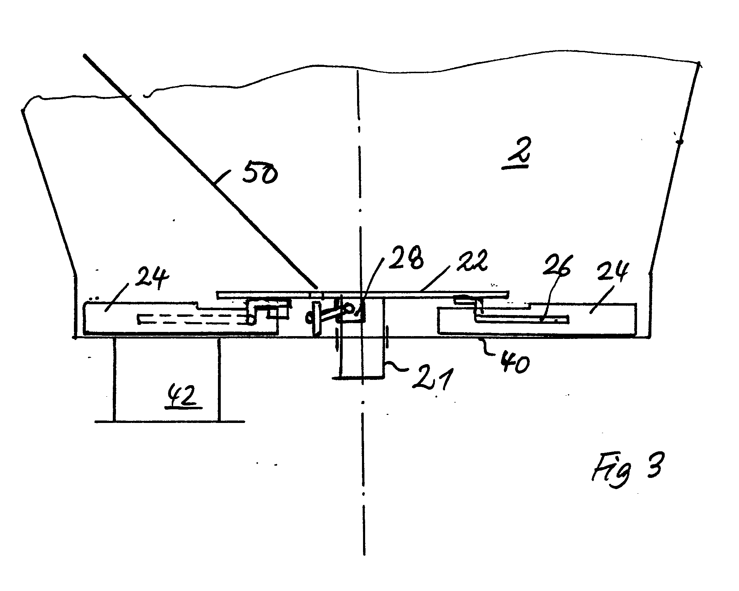

Wie insbesondere der Fig. 3 entnehmbar ist, befindet sich über jedem Zellenrad 20, fluchtend über dem Auslaß 42, eine Abdeckplatte 50, welche den direkten Durchtritt des Schüttgutes aus dem darüber befindlichen Behälter 2, 3 durch den Auslaß 42 verhindert. Die Abdeckplatte 50 stellt vielmehr sicher, daß das Schüttgut in den auslaßfreien Bereich der Radkammer 18 läuft und dann durch Drehung des Zellenrades 20 zum Auslaß 42 der Dosierkammer 6, 7 geforderd und dann aus dem Auslaß 42 abgegeben wird. Der Förderquerschnitt des Zellenrades 20 wird in der dargestellten Ausführungsform durch die Unterkante der Abdeckplatte 50 definiert, die in vorgegebenem, relativ geringem Abstand über dem Zellenrad 20 endet und dadurch die vom Zellenrad 20 zum Auslaß 42 mitnehmbare Menge an Schüttgut begrenzt.

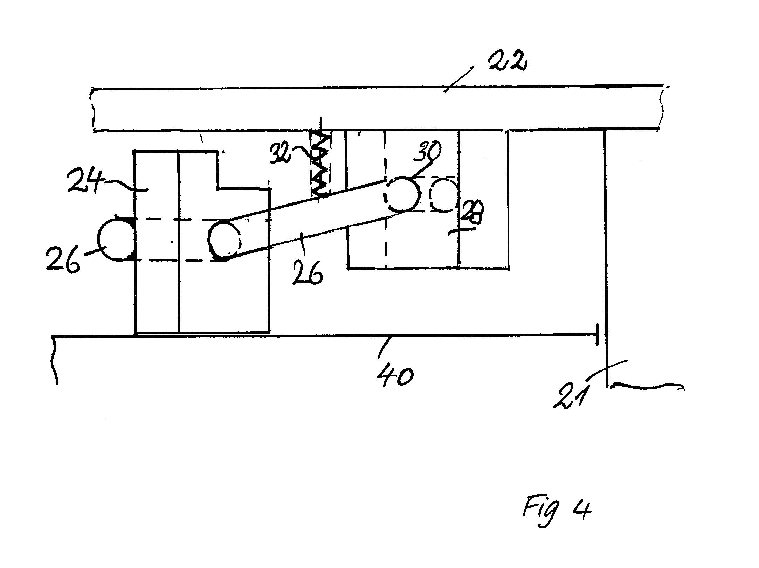

Wie sich insbesondere den Fig. 3 und 4 entnehmen läßt, sind die Radflügel der Zellenräder 20 in den Radkammern 18 gegen die Wirkung einer Feder 30 vertikal beweglich angeordnet und können daher nach oben ausweichen, wenn auf der Verschlußplatte 40 Schüttgut, z.B. grobe Sandkörner, Kieselsteine etc., sich fest abgelagert haben. In der dargestellten Ausführungsform sind die Radflügel 24 des Zellenrades 20 an abgekröpften Armen 26 befestigt, die auf der Unterseite einer Zentralscheibe 22 jedes Zellenrades 20 schwenkbar gelagert sind. Zu diesem Zweck sind an der Unterseite der Zentralscheiben 22 in Umfangsrichtung gleichmäßig beabstandet Lagerklötze 28 mit je einer auswärtsgerichteten, horizontalen Lagerbohrung 30 befestigt, in denen das freie Ende 27 der abgeköpften Arme 26 schwenkbar derart gelagert ist, daß die Radflügel 24 unter der Wirkung einer Feder 32 in eine untere Arbeitsstellung gedrückt werden, in der die Radflügel lediglich mit ausreichendem Laufspiel über der Verschlußplatte 40 liegen. Laufen die Radflügel 24 bei ihrer Bewegung über grobe Sandkörner oder Kieselsteine, so werden die Radflügel gegen die Wirkung der Feder 32 am freien Ende der abgekröpften Arme 26 verschwenkt und führen dabei eine Bewegung mit einer aufwärtsgerichteten Vertikalkomponente durch.

Um ein Verkanten oder Verklemmen der Radflügel sicher zu verhindern, ist die Unterkante der Radflügel 24 in Drehrichtung so angeschrägt, daß an der Vorderseite der Radflügel 24 ein größerer Abstand zur Verschlußplatte 40 als an der Rückseite besteht. Beim Gegenlaufen gegen feste oder verklemmte Erhebungen, Steine etc. werden die Radflügel 24 unter der Wirkung ihrer unteren Keilfläche 25 - gegen die Wirkung der Feder 32 - aufwärtsgedrückt und weichen auf diese Weise dem Hindernis aus. Die Zentralscheibe 22 der Zellenräder 20 kann über den Radflügeln 24 Ausnehmungen 23 aufweisen, welche die Radflügel 24 bei ihrer Aufwärtsbewegung aufnehmen können.

Um die Aufwärtsbewegung der Radflügel 24 zu begrenzen, lassen sich an der Zentralscheibe 22 auch Anschlagmittel od.dgl. vorsehen.

Fig. 4 zeigt einen vergrößerten Ausschnitt der Darstellung gemäß Fig. 3. Unter der Zentralscheibe 22 ist ein Lagerklotz 28 befestigt, der eine Lagerbohrung 30 aufweist, in welcher der abgekröpfte Arm 26 mit einem abgekröpften Ende schwenkbar gelagert ist. Der Arm 26 verläuft mit geringer Abwärtsneigung gegen den Radflügel 24 und wird durch diesen Radflügel 24 hindurchgeführt und mit seinem anderen Ende an der Außenfläche des Radflügels 24 verschweißt. Zwischen der Zentralscheibe 22 und dem Arm 26 ist eine Feder 32 angeordnet, die über den Arm 26 den Radflügel 24 abwärts gegen die Verschlußplatte 40 in die normale Arbeitsstellung drückt. Der Radflügel 24 ist gegen die Wirkung der Feder 32 vertikal nach oben bewegbar, falls er über ein Hindernis hinwegläuft, welches auf der Verschlußplatte 40 lagert. Die Feder 32 kann in verschiedenen Ausführungsformen ausgebildet sein, so z.B. auch als eine Schlingfeder, die um das im Lagerklotz 28 gelagerte Ende des Arms 26 geschlungen ist und mit zunehmender Aufwärtsbewegung des Arms 26 eine zunehmende Federkraft ausübt, die den Arm nach unten drücken will.

**Ansprüche**

1. Vorrichtung zur Herstellung gebrauchsfertiger Mischungen aus Schüttgut, wie z.B. Zement und Sand, das in einem oder mehreren Behältern bereitgehalten wird,
mit einem Auslauf in jedem Behälter,
mit einer etwa waagerechten Radkammer an jedem Auslauf,
mit je einem Zellenrad mit mehreren auswärtsgerichteten Radflügeln in jeder Radkammer,
mit einer die Radkammer unten begrenzenden, einen Auslaß aufweisenden Verschlußplatte,
und mit einer den Auslaß abdeckenden und den Förderquerschnitt des Zellenrades begrenzenden, insbesondere geneigten Abdeckplatte über jeder Radkammer, dadurch gekennzeichnet, daß die Radflügel (24) der Zellenräder (20) gegen die Wirkung einer Feder (32) vertikal beweglich angeordnet sind.

2. Vorrichtung nach Anspruch 1, dadurch gekennzeichnet, daß die Radflügel (24) des Zellenrades (20) um Achsen schwenkbar sind, die in einer Ebene senkrecht zur Zellenradachse (21) verlaufen und näherungsweise gegen die Zellenradachse (21) gerichtet sind.

3. Vorrichtung nach Anspruch 1 oder 2, dadurch gekennzeichnet, daß jedes Zellenrad (20) eine Zentralscheibe (22) enthält, an der die Radflügel (24) beweglich angeordnet sind.

4. Vorrichtung nach einem der vorstehenden Ansprüche, dadurch gekennzeichnet, daß die Radflügel (24) an der Unterseite der Zentralscheibe (22) federbelastet um horizontale Achsen angelenkt sind.

5. Vorrichtung nach einem der vorstehenden Ansprüche, dadurch gekennzeichnet, daß auf der Unterseite der Zentralscheibe (22) in Umfangsrichtung gleichmäßig beabstandet Lagerklötze (28) mit je einer auswärtsgerichteten Lagerbohrung (30) angeordnet sind, daß die Radflügel (24) an ihrem der Zellenradachse (21) zugewandten Ende an gekröpften Armen (26) sitzen, deren freies Ende in Lagerbohrungen (30) drehbar gelagert ist, und daß die Radflügel (24) unter der Wirkung der Feder (32) eine Arbeitsstellung mit geringem Laufspiel über der Verschlußplatte (40) einnehmen.

6. Vorrichtung nach Anspruch 5, gekennzeichnet durch Anschlagmittel, welche die gegen die Feder (32) mögliche Bewegung der Radflügel (24) in Richtung der Zellenradachse (21) auf einen vorgegebenen Wert begrenzen.

Fig.1

10220

Fig 2

50

2

28  22  26  24

24

42

21

40

*Fig 3*

Fig 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | EP-A-0 268 991 (TEPE) <br> * Zusammenfassung; Figur * <br> --- | 1 | B 28 C 7/06 |
| A | CH-A- 540 758 (FEJMERT) <br> * Figuren * <br> --- | 1-6 | |
| A | DE-A-1 801 505 (HÜTTENWERKE) <br> --- | | |
| A | DE-B-1 082 189 (SPÄTH) <br> --- | | |
| A | GB-A- 878 188 (FEJMERT) <br> --- | | |
| A | US-A-3 228 664 (McMILLAN) <br> --- | | |
| A | GB-A-1 135 796 (FEJMERT) <br> ----- | | |

|  |
|---|
| **RECHERCHIERTE SACHGEBIETE (Int. Cl.5)** |
| B 28 C <br> B 01 F <br> B 65 G |

Der vorliegende Recherchenbericht wurde für alle Patentansprüche erstellt

| Recherchenort | Abschlußdatum der Recherche | Prüfer |
|---|---|---|
| DEN HAAG | 20-03-1990 | PEETERS S. |